(19) Europäisches Patentamt
European Patent Office
Office européen des brevets

(11) **EP 4 148 685 A1**

(12) **EUROPEAN PATENT APPLICATION**

(43) Date of publication:
**15.03.2023 Bulletin 2023/11**

(21) Application number: **22158653.0**

(22) Date of filing: **24.02.2022**

(51) International Patent Classification (IPC):
**G06V 10/44** (2022.01)   **G06V 10/82** (2022.01)
**G06V 30/244** (2022.01)   **G06V 30/28** (2022.01)

(52) Cooperative Patent Classification (CPC):
**G06V 10/82; G06N 3/045; G06N 3/047; G06N 3/08; G06T 11/203; G06V 10/454; G06V 30/245; G06V 30/287**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2021   CN 202111057838**

(71) Applicant: **Beijing Baidu Netcom Science and Technology Co., Ltd.**
**Beijing 100085 (CN)**

(72) Inventors:
• **TANG, Licheng**
  **Beijing (CN)**
• **LIU, Jiaming**
  **Beijing (CN)**

(74) Representative: **Perronace, Andrea et al**
**Jacobacci & Partners S.p.A.**
**Via Tomacelli, 146**
**00186 Roma (IT)**

Remarks:
Amended claims in accordance with Rule 137(2) EPC.

(54) **METHOD, TRAINING METHOD, APPARATUS, DEVICE, MEDIUM AND COMPUTER PROGRAM FOR CHARACTER GENERATION**

(57)   Provided is a training method for a character generation model, and a character generation method, apparatus and device, which relates to the technical field of artificial intelligences, particularly, the technical field of computer vision and deep learning. The specific implementation schemes are: a source domain sample word and a target domain style word are input into the character generation model to obtain a target domain generation word; the target domain generation word and a target domain sample word are input into a pre-trained character classification model to calculate a feature loss of the character generation model; and a parameter of the character generation model is adjusted according to the feature loss. The accuracy of fonts generated by the character generation model may be improved in the embodiments of the present disclosure.

```
Input a source domain sample word and a target domain style word into
the character generation model to obtain a target domain generation word   — S101

Input the target domain generation word and a target domain sample
word into a pre-trained character classification model to calculate a
feature loss of the character generation model   — S102

Adjust a parameter of the character generation model according to the
feature loss   — S103
```

**FIG. 1**

**Description**

**TECHNICAL FIELD**

The present disclosure relates to the technical field of artificial intelligences, particularly, the technical field of computer vision and deep learning, for example, a training method for a character generation model, a character generation method, apparatus and device, and a medium.

**BACKGROUND**

The image processing is a practical technology with huge social and economic benefits, and is widely applied to all walks of life and daily life of people.
The style migration of an image means that the content of one image remains unchanged, and the style is migrated from the image to another image to form a new artistic image.

**SUMMARY**

The present disclosure provides a training method for a character generation model, a character generation method, apparatus and device, and a medium.
According to an aspect of the present disclosure, a training method for a character generation model is provided. The method includes: a source domain sample word and a target domain style word are input into the character generation model to obtain a target domain generation word; the target domain generation word and a target domain sample word are input into a pre-trained character classification model to calculate a feature loss of the character generation model is calculated; and a parameter of the character generation model is adjusted according to the feature loss.
According to another aspect of the present disclosure, a character generation method is provided. The method includes: a source domain input word and a target domain input word corresponding to the source domain input word are acquired; and the source domain input word and the target domain input word are input into a character generation model to obtain a target domain new word; where the character generation model is obtained by training according to the method of any one of the embodiments of the present disclosure
According to an aspect of the present disclosure, a training apparatus for a character generation model is provided. The apparatus includes a target domain generation word acquisition module, a feature loss calculation module and a first loss adjustment module. The target domain generation word acquisition module is configured to input a source domain sample word and a target domain style word into the character generation model to obtain a target domain generation word. The feature loss calculation module is configured to input the target domain generation word and a target domain sample word into a pre-trained character classification model to calculate a feature loss of the character generation model. The first loss adjustment module is configured to adjust a parameter of the character generation model according to the feature loss.
According to another aspect of the present disclosure, a character generation apparatus is provided. The apparatus includes an input word acquisition module and a character generation module. The input word acquisition module is configured to acquire a source domain input word and a target domain input word corresponding to the source domain input word. The character generation module is configured to input the source domain input word and the target domain input word into a character generation model to obtain a target domain new word; where the character generation model is obtained according to the training method for the character generation model of any one of the embodiments of the present disclosure.
According to another aspect of the present disclosure, an electronic device is provided. The electronic device includes at least one processor and a memory communicatively connected to the at least one processor. The memory stores an instruction executable by the at least one processor, and when the instruction is executed by the at least one processor, the at least one processor is caused to perform the training method for the character generation model described in any one of the embodiments of the present disclosure or the character generation method described in any one of the embodiments of the present disclosure.
According to another aspect of the present disclosure, a non-transitory computer-readable storage medium storing a computer instruction is provided. The computer instruction is configured to cause a computer to perform the training method for the character generation model described in any one of the embodiments of the present disclosure or the character generation method described in any one of the embodiments of the present disclosure.
According to another aspect of the present disclosure, a computer program is provided. The computer program includes a computer program, where the computer program, when executed by a processor, implements the training method for the character generation model described in any one of the embodiments of the present disclosure or performs the character generation method described in any one of the embodiments of the present disclosure.

The accuracy of fonts generated by the character generation model may be improved in the embodiments of the present disclosure.

It should be understood that the contents described in this section are not intended to identify key or critical features of the embodiments of the present disclosure, nor intended to limit the scope of the present disclosure. Other features of the present disclosure will be readily understood from the following description.

## BRIEF DESCRIPTION OF DRAWINGS

The drawings are intended to provide a better understanding of this scheme and are not to be construed as limiting the present disclosure, in which:

FIG. 1 is a schematic diagram of a training method for a character generation model according to an embodiment of the present disclosure;

FIG. 2 is a schematic diagram of a character generation model according to an embodiment of the present disclosure;

FIG. 3 is a schematic diagram of another training method for a character generation model according to an embodiment of the present disclosure;

FIG. 4 is a visualization effect diagram of an embodiment in which a character generation model is constrained by using a feature loss according to an embodiment of the present disclosure;

FIG. 5 is a visualization effect diagram of another embodiment in which a character generation model is constrained by using a feature loss according to an embodiment of the present disclosure;

FIG. 6 is an effect comparison diagram of generated results of a character generation model being constrained by using a feature loss according to an embodiment of the present disclosure;

FIG. 7 is an effect diagram of a generation word of a character generation model according to an embodiment of the present disclosure;

FIG. 8 is a schematic diagram of another training method for a character generation model according to an embodiment of the present disclosure;

FIG. 9 is a scene diagram of a training method for a character generation model according to an embodiment of the present disclosure;

FIG. 10 is a schematic diagram of a character generation method according to an embodiment of the present disclosure;

FIG. 11 is a schematic diagram of a training apparatus for a character generation model according to an embodiment of the present disclosure;

FIG. 12 is a schematic diagram of a character generation apparatus according to an embodiment of the present disclosure; and

FIG. 13 is a block diagram of an electronic device for implementing a training method for a character generation model or a character generation method of an embodiment of the present disclosure.

## DETAILED DESCRIPTION

Exemplary embodiments of the present disclosure are described below with reference to the accompanying drawings, in which various details of embodiments of the present disclosure are included to assist understanding, and which are to be considered as merely exemplary. Therefore, those of ordinary skill in the art will recognize that various changes and modifications of the embodiments described herein may be made without departing from the scope and spirit of the present disclosure. Also, descriptions of well-known functions and structures are omitted in the following description for clarity and conciseness.

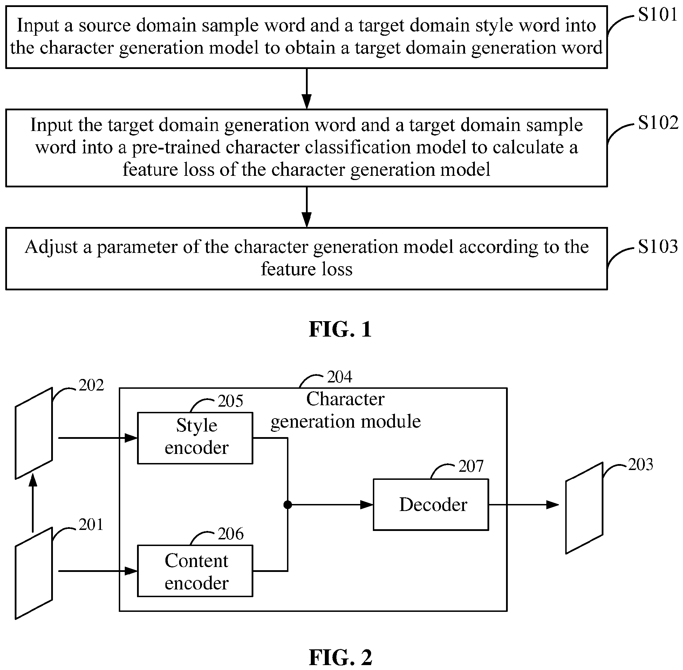

FIG. 1 is a flowchart of a training method for a character generation model according to an embodiment of the present disclosure, this embodiment may be applicable to train a character generation model, and the character generation model is configured to convert a source domain style character into a target domain style character. The method of this embodiment may be executed by a training apparatus for a character generation module, the apparatus may be implemented in software and/or hardware and is configured in an electronic device with certain data calculating capabilities, the electronic device may be a client device or a server device, and the client device is such as a mobile phone, a tablet computer, an on-board terminal, a desktop computer.

In S101, a source domain sample word and a target domain style word are input into the character generation model to obtain a target domain generation word.

The source domain sample word may refer to an image with a source domain font style, the source domain font style may refer to a regular font of characters, may also refer to a printed font, such as a regular script font, a song script font, or a black script font in Chinese characters, and a Times New Roman font or Calibri font in Western characters, the character may also include a numeric character. The Western character may include characters such as English, German, Russian, or Italian, and are not particularly limited thereto. The target domain style word may refer to an image with a target domain font style. The target domain generation word may refer to an image with a target domain font style. The target domain font style may be a user handwritten font style of characters or other wordart font style. It should be noted that the words in the embodiments of the present disclosure actually refer to the characters. The source domain sample word and the target domain generation word have the same image content and different styles. The target domain style word and the source domain sample word have the same partial image content and different styles, and the target domain style word and the target domain generation word have the same partial image content and the same style. The characters may be composed of at least one component, and having the same partial image content may mean having the same component, and in fact, a style standard word, the source domain sample word, and the target domain generation word have the same at least one component. The component may be a radical of a Chinese character, and may also be a word root of an English character and the like. For example, "你" may consist of a component "亻" and a component "尔"; "做" may consist of a component "亻" and a conponent "故", or may consist of a component "亻", a component "古" and a component "攵"; and "衣" may consist of a component "衣".

At least one component included in the source domain sample word may be determined according to the source domain sample word, and a word including the at least one component is queried in a set of pre-acquired words with the target domain font style according to each component, and the word including the at least one component is determined as the target domain style word.

In one specific example, the source domain sample word is an image generated by using the regular script "你", and the target domain generation word is an image generated by using the model-generated handwritten word "你". "你" may be split into a component "f" and a component "尔". The target domain style word is an image generated by using the handwritten word "称" written by hand actually and an image generated by using the handwritten word "佳" written by hand actually. Where "称" includes a component "尔", which is the same as the "尔" component in "你"; and the "佳" includes a component "亻", which is the same as the "亻" component in "你".

The character generation model is used for converting the source domain sample word into the target domain generation word. For example, an image containing the regular script word "你" is input into the character generation model, and the character generation model can output an image containing the handwritten word "你".

In S 102, the target domain generation word and a target domain sample word are input into a pre-trained character classification model to calculate a feature loss of the character generation model.

The target domain sample word is a true value corresponding to the source domain sample word. For example, the target domain generation word is an image generated by the character generation model that contains the handwritten word "做", and the target domain sample word is an actual image that contains the handwritten word "做", which may be an image generated by using a word that is real handwritten by the user. Moreover, in the foregoing, the target domain style word is also the image generated by using the word that is real handwritten by the user. It should be noted that the target domain style word and the target domain sample word, i.e., images of the user handwritten font style, may be based on a public data set, or based on an image generated by acquiring the user's real handwritten word through the authorization of the user.

The character classification model is used for judging whether the target generation word and the target domain sample word are wrong words or not. The character classification model may be a residual network 18 (ResNet18) structure, where the module of the ResNet18 structure includes 17 convolutional layers and 1 fully connected layer. For example, a training sample is a dataset of 500 fonts and 6763 characters per font, and experimentally, the trained character classification model achieves 97% classification accuracy on the dataset.

The character classification model may include multiple feature layers (e.g., 90 feature layers), and a generation feature map output by each layer may be obtained by inputting the target domain generation word into the character classification model. A sample feature map output by each layer is obtained by inputting the target domain sample word into the character classification model.

According to a difference between the generation feature map and the sample feature map output by each feature layer, the feature loss of the layer may be determined. Exemplarily, a sum of feature losses of at least one predetermined layer (e.g., 41st layer and 42nd layer) of the multiple feature layers may be selected as an overall feature loss. In one specific example, a feature loss of a middle layer (such as, the 45th layer) of the multiple feature layers may be selected as the overall feature loss.

In S 103, a parameter of the character generation model is adjusted according to the feature loss.

The parameter of the character generation model is adjusted according to the feature loss to obtain an updated character generation model. For a next source domain sample word, a corresponding target domain style word is determined, the operation S 101 is returned, and a training is performed repeatedly using the updated character generation model until a preset training stop condition is reached, the parameter of the character generation model is stopped being adjusted, and the trained character generation model is obtained. The training stop condition may include the times of a feature loss convergence or iterations greater than or equal to a set time threshold.

According to the technical scheme of the present disclosure, the target domain generation word is generated based on the source domain sample word and the target domain style word by using the character generation model, the generation of fonts of various styles may be realized, moreover, the feature loss is introduced through the character classification model, so that the character generation model learns a feature with a larger difference between the target domain generation word and the target domain sample word, the character generation model learns more font details, the capability of the character generation model to learn the font feature may be improved, and the accuracy of a word of the target domain font style generated by the character generation model is improved.

FIG. 2 is a schematic diagram of a character generation model according to an embodiment of the present disclosure. As shown in FIG. 2, a character generation model 204 includes a style encoder 205, a content encoder 206, and a decoder 207. The style encoder 205 is configured to encode a target domain style word 202, the content encoder 206 is configured to encode a source domain sample word 201, fuse two results obtained by encoding, and input the fused result to the decoder 207 so as to obtain a target domain generation word 203, where the target domain style word 202 is determined according to the source domain sample word 201.

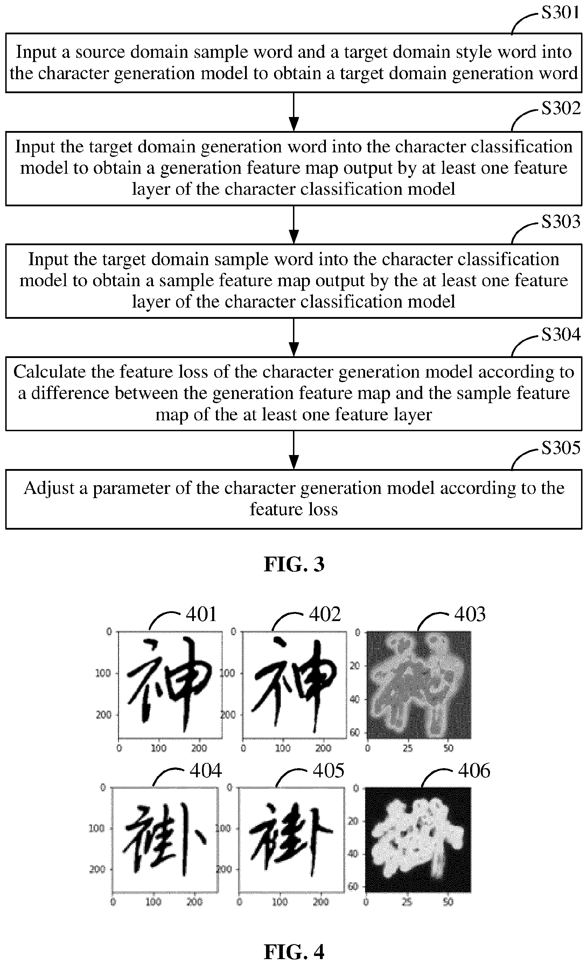

FIG. 3 is a flowchart of another training method for a character generation model according to an embodiment of the present disclosure, which is further optimized and expanded based on the above technical schemes, and may be combined with the above optional implementations. That the target domain generation word and the target domain sample word are input into the pre-trained character classification model to calculate the feature loss of the character generation model includes the following: the target domain generation word is input into the character classification model to obtain a generation feature map output by at least one feature layer of the character classification model; the target domain sample word is input into the character classification model to obtain a sample feature map output by the at least one feature layer of the character classification model; and the feature loss of the character generation model is calculated according to a difference between the generation feature map and the sample feature map of the at least one feature layer.

In S301, a source domain sample word and a target domain style word are input into the character generation model to obtain a target domain generation word.

S302, the target domain generation word is input into the character classification model to obtain a generation feature map output by at least one feature layer of the character classification model.

The generation feature map is an input feature map which uses the target domain generation word as the character classification model, that is, a feature map output by any feature layer in the character classification model. Each feature layer of the character classification model may correspondingly output one feature map. The target domain generation word is an image of a target domain font style word generated by the character generation model and is input into the character classification model as the input feature map. In the character classification model, a 1st feature layer processes the target domain generation word to obtain an output feature map corresponding to the 1st feature layer; and the i-th feature layer (i is greater than 1) processes an output feature map output by the (i-1)-th feature layer to obtain an output feature map corresponding to the i-th feature layer.

In S303, the target domain sample word is input into the character classification model to obtain a sample feature map output by the at least one feature layer of the character classification model.

The sample feature map is a feature map output by any feature layer in the character classification model by using the target domain sample word as an input feature map of the character classification model. Each feature layer of the character classification model may correspondingly output one feature map. The target domain sample word is an image of a word with a real handwritten target domain font style and is input into the character classification model as the input feature map. In the character classification model, the 1st feature layer processes the target domain sample word to obtain an output feature map corresponding to the 1st feature layer; and the i-th feature layer (i is greater than 1) processes an output feature map output by the (i-1)-th feature layer to obtain an output feature map corresponding to the i-th feature layer.

Optionally, the source domain sample word is an image with a source domain font style, and the target domain sample word is an image with a target domain font style.

The source domain sample word is an image generated by using words with the source domain font style. The target domain sample word is an image generated by using words with the target domain font style. The source domain font style is different from the target domain font style. Exemplarily, the source domain font style is a printed font, for example, for the Chinese character font, the source domain font style is a song script font, a regular script font, a black script font, or a clerical script font; the target domain font style is an artistic font style such as a real handwritten font style of the user.

The source domain sample word is configured as the image with the source domain font style, and the target domain sample word is configured as the image with the target domain font style, conversion of different font styles may be realized, and a number of fonts with new styles is increased.

In S304, the feature loss of the character generation model is calculated according to a difference between the generation feature map and the sample feature map of the at least one feature layer.

The character classification model includes at least one feature layer, from which at least one feature layer may be selected, and for any selected feature layer, the difference between the generation feature map of this feature layer and the sample feature map of the feature layer may be calculated. The difference is used for describing the difference level between the generation feature map and the sample feature map so as to evaluate whether a generation word of the model is similar to a real handwritten sample word. The feature loss is calculated according to the difference, and the difference level between the generation word of the model and the real handwritten sample word may be described in more detail from the dimension of the feature.

According to the embodiments of the present disclosure, the feature loss may be used for constraining the similarity level between a target domain generation word output by a loop generation network model and the target domain sample word, so that the accuracy of the style transfer of the loop generation network model is improved.

The selected feature layer may be set as desired, for example, the difference between the generation feature map and the sample feature map of a median feature layer of the multiple feature layers may be selected to calculate the feature loss of the character generation model, such as, a total of 90 feature layers, the median is the 45-th feature layer and the 46-th feature layer. A number of the selected feature layer is 1, and the difference between the generation feature map and the sample feature map of the feature layer may be directly used as the feature loss; a number of the selected feature layers is at least two, a numerical calculation may be conducted on the difference of the feature layers to obtain the feature loss, and the numerical calculation may be a summation calculation, a product calculation or a weighted average calculation or the like.

Optionally, that the feature loss of the character generation model is calculated includes: a pixel difference between a generation feature map and a sample feature map of the each feature layer of the at least one feature layer is calculated to obtain a pixel loss of the at least one feature layer; and the feature loss of the character generation model is calculated according to the pixel loss of the at least one feature layer.

Feature maps output by a same feature layer have the same size, and the pixel difference may be calculated from pixels constituting the feature map so as to calculate a difference between images from a pixel dimension as the pixel loss of the feature layer. That the feature loss is calculated according to the pixel loss of the feature layer may include, the number of feature layers is 1, and the pixel loss is used as the feature loss; a number of feature layers is at least two, and a sum of pixel losses is calculated to serve as the feature loss.

Exemplarily, the pixel loss for each feature layer may be calculated according to an L1 norm loss function, i.e., a sum of the absolute differences between pixels at a same position in a real word and a generation word.

The pixel difference between the generation feature map and the sample feature map is used as the difference between the generation feature map and the sample feature map, the pixel loss is calculated, and the feature loss is determined, the feature loss may be calculated from the pixel dimension, the fine granularity of the calculation of the feature loss is controlled, the difference level between the generation word of the model and the real handwritten sample word is described from pixel details, and the feature loss is calculated to adjust the parameter of the character generation model, so that the character generation model learns more refined font style details of the sample word, and thus the accuracy of the generation word of the character generation model is improved.

Optionally, that the pixel difference between the generation feature map and the sample feature map of the each of the at least one feature layer is calculated includes: for a pixel point at each of multiple positions in the generation feature map of the each of the at least one feature layer, an absolute value of a difference value between a pixel value of the pixel point at the each of multiple positions and a pixel value of a pixel point at a corresponding position in the sample feature map is calculated to obtain a difference of the pixel point at the each position; and the pixel difference between the generation feature map and the sample feature map of the at least one feature layer is determined according to differences of pixel points at the multiple positions.

For the feature layer, an absolute value of a difference value between the pixel value of the pixel point in the generation feature map and the pixel value of the pixel point in the sample feature map at a same position is calculated, and the absolute value is determined as the difference of the pixel point at the position. Sizes of the generation feature map and the sample feature map are the same, the numbers of pixels included in the feature maps are the same, that is, the numbers of positions included in the feature maps are the same, and a sum of the differences of the pixel points at the multiple positions is determined as the pixel difference between the generation feature map and the sample feature map of the feature layer. The multiple positions may be all positions included in the feature map output by the feature layer and may also be part of screened positions.

In a specific example, the size of each of the generation feature map and the sample feature map is 64 * 64, 4096 positions are included, an absolute value of a pixel value difference between the pixel point of the generation feature map and the pixel point of the sample feature map may be calculated for each position, 4096 difference absolute values are obtained, a sum of the 4096 difference absolute values is counted, and the pixel difference between the generation feature map and the sample feature map of the feature layer is obtained. It should be noted that the pixel difference is actually calculated by adopting an L1 norm loss function, and an element of the L1 norm loss function is a pixel value of a pixel point at the i-th position in the feature map.

An absolute value of a difference of a pixel value between corresponding pixel points of two feature maps at each position is calculated, a pixel difference of the feature layer is determined according to the absolute values of multiple positions, and the L1 norm loss is calculated by using pixel values of pixel points at a same position as elements of the L1 norm loss function, and thus the robustness of the character generation model may be improved.

In S305, a parameter of the character generation model is adjusted according to the feature loss.

The parameter of the character generation model is adjusted according to the feature loss calculated from the difference, so that more font details of the real handwritten sample word may be learned. Exemplarily, parameters may be adjusted in a manner in which the L1 norm loss function adjusts the parameter of the module according to the feature loss adjustment parameter until a sum of absolute differences of the real word and the generation word is minimized.

According to the technical scheme of the present disclosure, the difference between the generation feature map and the sample feature map of the at least one feature map in the character classification model is calculated, and the feature loss is determined, the difference level between the generation word of the model and the real handwritten sample word may be described in more detail from the dimension of the feature, and the parameter of the character generation model is adjusted according to the feature loss calculated at the difference level, so that the character generation model may learn more font details of the real handwritten sample word, and finally, the generation word of the character generation model is more similar to the real handwritten sample word, and thus the accuracy of the generation word of the character generation model is improved.

FIG. 4 is a visualization effect diagram of an embodiment in which a character generation model is constrained by using a feature loss according to an embodiment of the present disclosure. As shown in FIG. 4, a target domain sample word 401 is a real image containing the handwritten word "神", i.e., the "神" word in the target domain sample word 401 is the real handwritten word of the user. A target domain generation word 402 is an image which is generated by the character generation model and contains a handwritten word "神", and the sizes of the target domain sample word 401 and the target domain generation word 402 are 256 * 256. A target domain sample word 404 is a real image containing a handwritten word "裨", i.e., the "裨" word in the target domain sample word 404 is the real handwritten word of the user. A target domain generation word 405 is an image which is generated by the character generation model and contains a handwritten word "裨", and sizes of the target domain sample word 401, the target domain generation word 402, the target domain sample word 404 and the target domain generation word 405 are 256 * 256. The target domain sample word 401, the target domain generation word 402, the target domain sample word 404 and the target domain generation word 405 are input into a character classification model, a sample feature map and a sample feature map are output on a first preset layer (such as, a 30th feature layer) of the character classification model, respectively, and sizes of the two sample feature maps are both 64 * 64. After a pixel difference calculation is performed on the two 64 * 64 images, thermal effect diagrams 403 and 406 representing a difference between the two images are obtained. The thermal effect diagrams 403 and 406 are also 64 * 64 images, the darker color in the thermal effect diagram 403 indicates that a difference between the target domain sample word 401 and the target domain generation word 402 is larger, and the darker color in the thermal effect diagram 406 indicates that a difference between the target domain sample word 404 and the target domain generation word 405 is larger. Therefore, the character generation model is more focused on learning the features of the parts with darker colors in the thermal effect diagrams 403 and 406, so that the capability of the learning feature of the character generation model is improved.

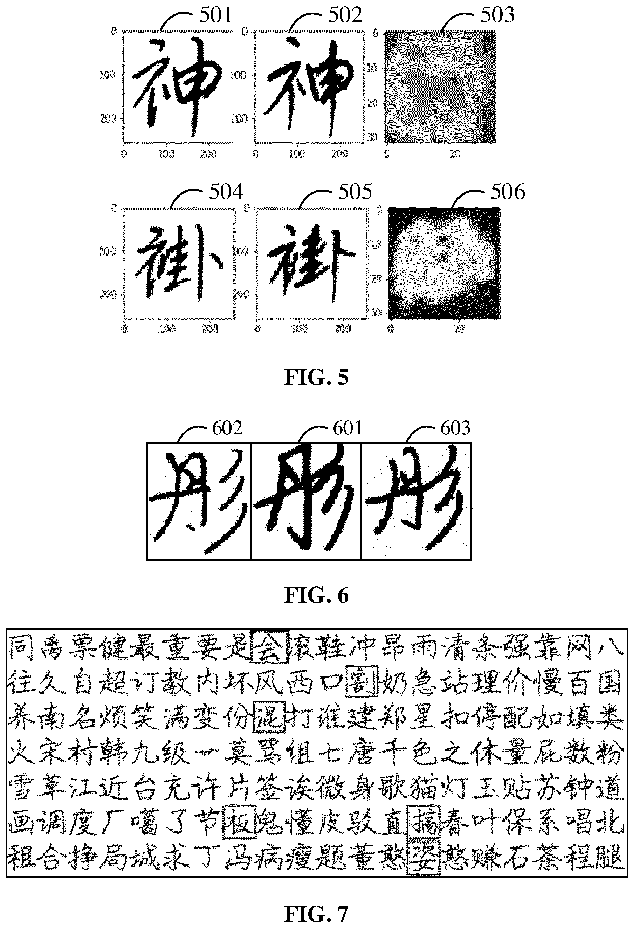

FIG. 5 is a visualization effect diagram of another embodiment in which a character generation model is constrained by using a feature loss according to an embodiment of the present disclosure. As shown in Figure 5, a target domain sample word 501, a target domain generation word 502, a target domain sample word 504 and a target domain generation word 505 are input into a character classification model, a sample feature map and a sample feature map are output on a second preset layer (such as, a 31st feature layer) of the character classification model, respectively, and sizes of the two sample feature maps are 32 * 32. After a pixel difference calculation is performed on the two 32 * 32 images, thermal effect diagrams 503 and 506 representing a difference between the two images are obtained. The thermal effect diagrams 503 and 506 are also 32 * 32 images, the darker color in the thermal effect diagram 503 indicates that a difference between the target domain sample word 501 and the target domain generation word 502 is larger, and the darker color in the thermal effect diagram 506 indicates that a difference between the target domain sample word 504 and the target domain generation word 505 is larger. Therefore, the character generation model is more focused on learning the features of the parts with darker colors in the thermal effect diagrams 503 and 506, so that the capability of the learning feature of the character generation model is improved.

It should be understood that the thermal effect diagrams 403 and 503 may be combined to collectively cause the character generation model to learn features with greater differences between the target domain sample word 401 and the target domain generation word 402, and features with greater differences between the target domain sample word 501 and the target domain generation word 502, and features with greater differences between the target domain sample word 404 and the target domain generation word 405and features with greater differences between the target domain sample word 504 and the target domain generation word 505 are learned by combining the thermal effect diagrams 406 and 506, so that the capability of the learning feature of the character generation model is improved.

FIG. 6 is an effect comparison diagram using a feature loss according to an embodiment of the present disclosure. As shown in FIG. 6, an image 601 is a real image containing the handwritten word "彤", i.e., the "彤" word in the image 601 is the real handwritten of the user. An image 602 is an image which contains the handwritten word "彤" and generated without using a feature loss being constrained a character generation model. An image 603 is an image which contains the handwritten word "彤" and generated using a feature loss being constrained a character generation model. Experimentally, the "彤" word in the image 603 learns more features of the "彤" word (i.e., the "彤" word in the image 601) written by the real user than the "彤" word in the image 602, and is more similar to the "彤" word written by the real user.

FIG. 7 is an effect diagram of a generation word of a trained character generation model by using a feature loss being constrained a character generation model according to an embodiment of the present disclosure. Words in the frame are real handwritten words, and words which are not located in the frame are generation words of the character generation model. Therefore, a font style of the generation word of the character generation model is basically consistent with a font style of the real handwritten word.

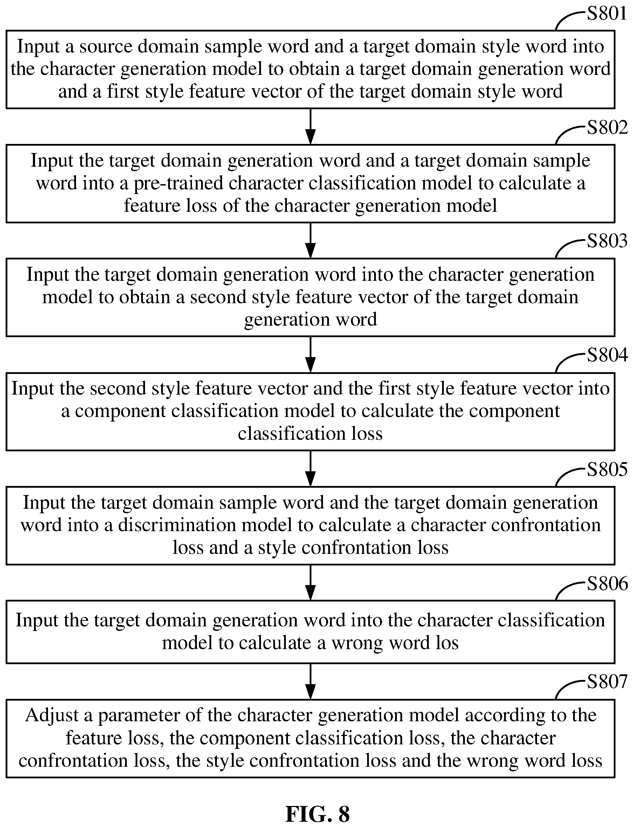

FIG. 8 is a flowchart of another training method for a character generation model according to an embodiment of the present disclosure, which is further optimized and expanded based on the above technical schemes, and may be combined with the above optional implementations. The training method for the character generation model is optimized to includes: the target domain style word is input into the character generation model to obtain a first style feature vector of the target domain style word; the target domain generation word is input into the character generation model to obtain a second style feature vector of the target domain generation word; the second style feature vector and the first style feature vector are input into a component classification model to calculate a component classification loss; the target domain sample word and the target domain generation word are input into a discrimination model to calculate a character confrontation loss and a style confrontation loss; the target domain generation word is input into the character classification model to calculate a wrong word loss; a parameter of the character generation model is adjusted according to the component classification loss, the character confrontation loss, the style confrontation loss and the wrong word loss.

In S801, a source domain sample word and a target domain style word are input into the character generation model to obtain a target domain generation word and a first style feature vector of the target domain style word.

The first style feature vector of the target domain style word refers to a feature vector obtained by encoding the target domain style word by a style encoder.

That the source domain sample word and the target domain style word are input into the character generation model includes: the source domain sample word is sent to a content encoder to obtain a content feature vector, and the target domain style word is sent to a style encoder to obtain a first style feature vector. Multiple target domain style words are provided, and multiple first style feature vectors are provided correspondingly. The multiple first style feature vectors are fused to obtain a fusion style feature vector, and the fusion style feature vector and the content feature vector are fused to obtain a target feature vector, and the target feature vector is sent to a decoder for decoding, and the target domain generation word is obtained. That the multiple first style feature vectors are fused to obtain the fusion style feature vector may include: for the first style feature vector, values of vector elements at each position are summed and averaged to obtain a value of the vector element at the position, and the fusion style feature vector is determined according to the values of the vector elements at all positions. That the fusion style feature vector and the content feature vector are fused to obtain the target fusion feature vector may include: for the fusion style feature vector, the sum of the value of the vector element of each position and a value of a vector element of the content feature vector at a corresponding position is calculated to obtain a value of the vector element at the position, and the target fusion feature vector is determined according to the values of the vector elements at all positions

In S802, the target domain generation word and a target domain sample word are input into a pre-trained character classification model to calculate a feature loss of the character generation model.

In S803, the target domain generation word is input into the character generation model to obtain a second style feature vector of the target domain generation word.

The second style feature vector of the target domain generation word is a feature vector obtained by encoding the target domain generation word by the style encoder. That the target domain generation word is input into the character generation model means that the target domain generation word is input into the style encoder to obtain the second style feature vector of the target domain generation word.

In S804, the second style feature vector and the first style feature vector are input into a component classification model to calculate the component classification loss.

The component classification model is used for detecting whether components which are the same as components included in the source domain sample word exist in components included in words corresponding to the style feature vector or not, that is, the component classification model is used for detecting whether radicals which are the same as the radical of the source domain sample word exist in the words corresponding to the style feature vector or not. The second style feature vector and the first style feature vector are input into the component classification model to calculate the component classification loss. The component classification loss is used for constraining the accuracy of the component included in the target domain generation word output by the character generation model, and may be used for judging whether the component included in the word is correct or not. In practice, the component classification loss refers to a difference between an identified component included by the word and a correct component included by the word.

Exemplarily, the first style feature vector $\overline{A}=[a_0,a_1 \cdots a_i \cdots a_m]$, each element in $\overline{A}$ may represent one component in a component table, the second style feature vector $\overline{B}=[b_0,b_1 \cdots bi \cdots b_m]$, each element in $\overline{B}$ may represent one component in the component table, and m represents the number of components in the component table. For example, the component table has 100 components, for the Chinese character, a component is a radical, and the component table has 100 radicals, then m may be equal to 99. For example, the target domain style word is a "佳" word, which may be composed of a component "亻" and a component "圭", located 2nd and 3rd in m words of the component table, respectively, then the first style feature vector of the "佳" word may be represented as $\overline{A}=[0,1,1,0,0......0]$. As another example, the target domain generation word is a "你" word, which may be composed of a component "亻" and a component "尔", located 2nd and 5th in the m words of the component table, respectively, then the second style feature vector of the "你" word may be represented as $\overline{B}=[0,1,0,0,1......0]$.

For the target domain style word, that a target first style feature vector $\overline{A}^*=[a^*_0,a^*_1 \cdots a^*_i \cdots a^*_m]$ is preset, and each element in $\overline{A}^*$ may represent one component in the component table. For the target domain generation word, that a target second style feature vector $\overline{B}^*=[b^*_0,b^*_i \cdots b^*_i \cdots b^*_m]$ is preset, and each element in $\overline{B}^*$ may represent one component in the component table. The target first style feature vector $\overline{A}^*$ represents a vector that the character classification model should output when the target domain style word is input into the character classification model. For example, the target domain style word is a "佳" word, which may be composed of the component "亻" and the component "圭", located 2nd and 3rd in the m words of the component table, respectively, then the target first-style feature vector of the "佳" word may represent $\overline{A}^*$ =[0,1,1,0,0......0]. Correspondingly, the target second style feature vector $\overline{B}^*$ represents a vector that the character classification model should output when the target domain generation word is input into the character classification model. For example, the target generation word is a "你" word, which may be composed of the component "亻" and the component "尔", located 2nd and 5th in the m words of the component table, respectively, then the target second-style feature vector may be represented as $\overline{B}^*$=[0,1,0,0,1......0].

A first component classification loss may be determined according to a cross entropy between the first style feature vector $\overline{A}$ of the target domain style word and the target first style feature vector $\overline{A}^*$ of the target domain style word. The first component classification loss may be expressed by equation (1) as follows:

$$\mathrm{L_{cls1}}\text{=-}\sum_0^m \mathrm{a}_i \, log\mathrm{a} *_i \quad (1)$$

$\mathrm{L_{cls1}}$ represents the first component classification loss, ai represents an element with a subscript of i in the first style feature vector, a*$_i$ represents an element with a subscript of i in the target first style feature vector, i is an integer greater than or equal to 0 and less than or equal to m, and m represents the number of elements in the first style feature vector and the target first style feature vector.

A second component classification loss may be determined according to a cross entropy between the second style feature vector $\overline{B}$ of the target domain generation word and the target second style feature vector $\overline{B}^*$ of the target domain generation word. The second component classification loss may be expressed by equation (2) as follows:

$$\mathrm{L_{cls2}}\text{=-}\sum_0^m \mathrm{b}_i \, log\mathrm{b} *_i \quad (2)$$

$\mathrm{L_{cls2}}$ represents the second component classification loss, bi represents an element with a subscript of i in the second style feature vector, b*$_i$ represents an element with a subscript of i in the target second style feature vector, i is an integer greater than or equal to 0 and less than or equal to m, and m represents the number of elements in the second style feature vector and the target second style feature vector.

A component classification loss of the character generation model may be determined according to the first component classification loss and the second component classification loss. The component classification loss of the character generation model may be expressed by equation (3) as follows:

$$\mathrm{L_{cls}} = \mathrm{L_{cls1}}\text{+}\mathrm{L_{cls2}}\text{=-}\sum_0^m \mathrm{a}_i \, log\mathrm{a} *_i \text{-}\sum_0^m \mathrm{b}_i \, log\mathrm{b} *_i \quad (3)$$

$\mathrm{L_{cls}}$ represents the component classification loss of the character generation model.

According to the embodiments of the present disclosure, the component classification loss may be used for constraining the accuracy of the component included in the target domain generation word output by the character generation model, so that the probability that the character generation model generates generation words composed of erroneous components is reduced.

In S805, the target domain sample word and the target domain generation word are input into a discrimination model to calculate a character confrontation loss and a style confrontation loss.

The source domain sample word is a real handwritten word image, while the target domain sample word is a model generation word image, which may be referred to as a fake word image. The target domain generation word is a model generated handwritten image, which may be referred to as a fake handwritten word image. During training, the target domain sample word may be labeled as a true Real (e.g., with a value of 1) and the target domain generation word may be labeled as Fake (e.g., with a value of 0). It is detected whether the target domain sample word and the target domain generation word are the real handwritten word or not, and actually it is detected whether the target domain sample word and the target domain generation word are a module generation word or not, and in a case where a result output by the discrimination model through words generated by the character generation model is true, it is indicated that the words generated by the character generation model are very similar to the handwritten words and may be just-as-good fakes.

The discrimination model is used for detecting whether the target domain sample word and the target domain generation word are the real handwritten word, classifying character types, classifying style types, and detecting whether the target domain generation word is a target domain sample word that is expected to be generated. The character confrontation loss is used for performing a character classification on words and judging whether the words are the real handwritten words or not; the style confrontation loss is used for performing a style classification on words, and whether the words are the real handwritten words. The character confrontation loss refers to a difference between the character classification of a word and a correct character type of that word, and a difference between the word and the true handwritten word; and the style confrontation loss refers to a difference between the style type of a word and a correct style type of that word, and a difference between the word and the true handwritten word.

For the discrimination model being used for detecting whether the target domain sample word and the target domain generation word are the real handwritten words, the character types are classified. The target domain sample word is input into the discrimination model to obtain a first character confrontation vector of the target domain sample word, and the target domain generation word is input into the discrimination model to obtain a second character confrontation vector of the target domain generation word.

Exemplarily, the first character confrontation vector $\overline{C}=[c_0,c_1\cdots\cdots c_i\cdots\cdots c_j]$, each element in $\overline{C}$ may represent one character in the character table, the second character confrontation vector $\overline{D}=[d_0,d_1\cdots\cdots d_i\cdots\cdots d_j]$, each element in $\overline{D}$ may represent one character in the character table, and j represents the number of characters in the character table. For example, the character table has 6000 characters, and for the Chinese character, the character table includes 6000 Chinese characters, then j may be equal to 5999. Moreover, the element being 1 indicates that a corresponding word is a real handwritten word, and the element being -1 indicates that a corresponding word is a model generation word. For example, the target domain sample word is the "你" word, the "你" word is located 1st in the character table, and the target domain sample word is the real handwritten word with a value of 1 for the 1st element, then the first character confrontation vector of the "你" word is represented as $\overline{C}=[1,0,0,0,0......0]$. As another example, if the target domain generation word is a "佳" word, the "佳" word is located 2nd in the character table, and the target domain generation word is the model generation word with a value of -1 for the 2nd element, then the second character confrontation vector of the "佳" word may be represented as $\overline{D}=[0,-1,0,0,0......0]$.

For the target domain sample word, that a target first character confrontation vector $\overline{C^*}=[c^*_0, c^*_1\cdots\cdots c^*_i\cdots\cdots c^*_j]$ is preset, and each element in $\overline{C^*}$ may represent one character in the character table. For the target domain generation word, that a target second character confrontation vector $\overline{D^*}=[d^*_0, d^*_1\cdots\cdots d^*_i\cdots\cdots d^*_j]$ is preset, and each element in $\overline{D^*}$ may represent one character in the character table. The target first character confrontation vector $\overline{C^*}$ represents a vector that the discrimination model should output when the target domain sample word is input into the discrimination model. For example, if the target domain sample word is a "你" word, the "你" word is located 1st in the character table, and the target domain sample word is the real handwritten word with a value of 1 for the 1st element, then the first character confrontation vector of the "你" word is represented as $\overline{C^*}=[1,0,0,0,0......0]$. Correspondingly, the target second character confrontation vector $\overline{D^*}$ represents a vector that the discriminating model should output when the target domain generation word is input into the discriminating model. For example, if the target generated word is the "佳" word, the "佳" word is located 2nd in the character table, and the target domain generation word is the model generation word with a value of -1 for the 2nd element, then the second character confrontation vector of the "佳" word may be represented as $\overline{D^*}=[0,-1,0,0,0......0]$.

A first character confrontation loss may be determined according to a cross entropy between the first character confrontation vector $\overline{C}$ of the target domain sample word and the target first character confrontation vector $\overline{C^*}$ of the target domain sample word. The first character confrontation loss may be expressed by equation (4) as follows:

$$\mathrm{L}^{data}_{gen1} = -\sum_0^j c_i \log c*_i \qquad (4)$$

$\mathrm{L}^{data}_{gen1}$ represents the first character confrontation loss, $c_i$ represents an element with a subscript of i in the first character confrontation vector, $c^*_i$ represents an element with a subscript of i in the target first character confrontation vector, i is an integer greater than or equal to 0 and less than or equal to j, and j represents the number of elements in the first character confrontation vector and the target first character confrontation vector.

A second character confrontation loss may be determined according to a cross entropy between the second

character confrontation vector $\overline{D}$ of the target domain generation word and the target first character confrontation vector $\overline{D}*$ of the target domain generation word. The second character confrontation loss may be expressed by equation (5) as follows:

$$L_{gen2}^{data}=-\sum_0^j d_i\, log\, d*_i \quad (5)$$

$L_{gen2}^{data}$ represents the second character confrontation loss, $d_i$ represents an element with a subscript of i in the second character confrontation vector, $d*_i$ represents an element with a subscript of i in the target second character confrontation vector, i is an integer greater than or equal to 0 and less than or equal to j, and j represents the number of elements in the second character confrontation vector and the target second character confrontation vector.

A character confrontation loss of the character generation model may be determined according to the first character confrontation loss and the second character confrontation loss. The character confrontation loss of the character generation model may be expressed by equation (6) as follows:

$$L_{gen}^{data}\ =\ L_{gen1}^{data}+L_{gen2}^{data}=-\sum_0^j c_i\, log\, c*_i-\sum_0^j d_i\, log\, d*_i \quad (6)$$

$L_{gen}^{data}$ represents the character confrontation loss of the character generation model.

The discrimination model is used for detecting whether the target domain sample word and the target domain generation word are the real handwritten word or not and classifying style types. The target domain sample word is input into the discrimination model to obtain a first style confrontation vector of the target domain sample word, and the target domain generation word is input into the discrimination model to obtain a second style confrontation vector of the target domain generation word.

Exemplarily, the first style confrontation vector $\overline{E}=[e_0,e_1\bullet\bullet\bullet\bullet\bullet e_i\bullet\bullet\bullet\bullet\bullet e_k]$, each element in $\overline{E}$ may represent one style type in a style table, the second style confrontation vector $\overline{F}=[f_0,f_1\bullet\bullet\bullet\bullet\bullet f_i\bullet\bullet\bullet\bullet\bullet f_k]$, each element in $\overline{F}$ may represent one style type in the style table, and k represents the number of style types in the style table. For example, the style table has 1000 style types, for the handwritten word, the style table includes 1000 handwritten fonts, then k may be equal to 999. Moreover, the element being 1 indicates that a corresponding word is a real handwritten word, and the element being -1 indicates that a corresponding word is a model generation word. For example, the target domain sample word is the "你" word, a style type of the "你" word is 998th in the style table, and the target domain sample word is the real handwritten word with a value of 1 for the 998th element, then the first style confrontation vector of the "you" word is represented as $\overline{E}=$ [0,0,0......1,0]. As another example, the target domain generation word is a "佳" word, a style type of the "佳" word is 999th in the style table, and the target domain generation word is the model generation word with a value of -1 for the 999th element, then the second style confrontation vector of the "佳" word may be represented as $\overline{F}=$[0,0,0......0,-1].

For the target domain sample word, that a target first style countermeasure vector $\overline{E}*=[e*_0, e*_1\bullet\bullet\bullet\bullet\bullet e*_i\bullet\bullet\bullet\bullet\bullet e*_k]$ is preset, and each element in $\overline{E}*$ may represent one style type in the style table. For the target domain generation word, that a target second style confrontation vector $\overline{F}*=[f*_0, f*_1\bullet\bullet\bullet\bullet\bullet f*_i\bullet\bullet\bullet\bullet\bullet f*_k]$ is preset, and each element in $\overline{F}$ may represent one style type in the style table. The target first style confrontation vector $\overline{E}*$ represents a vector that the discrimination model should output when the target domain sample word is input into the discrimination model. For example, the target domain sample word is a "你" word, the style type of the "你" word is 998th in the style table, and the target domain sample word is the real handwritten word with a value of 1 for the 998th element, then the first style confrontation vector of the "你" word is represented as $\overline{E}* =$[0,0,0......1,0]. Correspondingly, the target second style confrontation vector $\overline{F}*$ represents a vector that the discrimination model should output when the target domain generation word is input into the discrimination model. For example, the target generated word is the "佳" word, the style type of the "佳" word is located at 999th in the style table, and the target domain generation word is the model generation word with a value of -1 for the 999th element, then the second style confrontation vector of the "佳" word may be represented as $\bar{F}^*$=[0,0,0......0,-1].

A first style confrontation loss may be determined according to a cross entropy between the first style confrontation vector E of the target domain sample word and the target first style confrontation vector $\bar{E}^*$ of the target domain sample word. The first style confrontation loss may be expressed by equation (7) as follows:

$$L_{gen1}^{style} = -\sum_0^k e_i \log e *_i \quad (7)$$

$L_{gen1}^{style}$ represents the first style confrontation loss, ei represents an element with a subscript of i in the first style confrontation vector, $e^*_i$ represents an element with a subscript of i in the target first style confrontation vector, i is an integer greater than or equal to 0 and less than or equal to k, and k represents the number of elements in the first style confrontation vector and the target first style confrontation vector.

A second style confrontation loss may be determined according to a cross entropy between the second style confrontation vector D of the target domain generation word and the target second style confrontation vector $\bar{D}^*$ of the target domain generation word. The second style confrontation loss may be expressed by equation (8) as follows:

$$L_{gen2}^{style} = -\sum_0^k f_i \log f *_i \quad (8)$$

$L_{gen2}^{style}$ represents the second style confrontation loss, $f_i$ represents an element with a subscript of i in the second style confrontation vector, $f^*_i$ represents an element with a subscript of i in the target second style confrontation vector, i is an integer greater than or equal to 0 and less than or equal to k, and k represents the number of elements in the second style confrontation vector and the target second style confrontation vector.

A style confrontation loss of the character generation model may be determined according to the first style confrontation loss and the second style confrontation loss. The style confrontation loss of the character generation model may be expressed by equation (9) as follows:

$$L_{gen}^{style} = L_{gen1}^{style} + L_{gen2}^{style} = -\sum_0^k e_i \log e *_i - \sum_0^k f_i \log f *_i \quad (9)$$

$L_{gen}^{style}$ represents the style confrontation loss of the character generation model.

The discrimination model is used for detecting whether the target domain generation word is a target domain sample word expected to be generated or not. The target domain sample word and the target domain generation word are input into the discrimination model to obtain a cycle-consistency loss.

In order to ensure that the target domain generation word obtained by inputting the source domain sample word into the character generation model is only style conversion and the content is kept unchanged, a cycle-consistency loss may be added for the character generation model. The loss may be calculated from a difference between the target domain sample word and the target domain generation word. For example, a pixel value of each corresponding pixel point of the two images of the target domain sample word and the target domain generation word is subtracted, the absolute value is solved, the difference of each pixel point is obtained, the differences of all pixel points are summed to obtain the cycle-consistency loss of the character generation model, and the cycle-consistency loss may be recorded as L1$_{A2B}$.

Optionally, the training method for the character generation model further includes: the target domain sample word and the target domain generation word are input into the discrimination model to calculate the cycle-consistency loss; and the parameter of the character generation model is adjusted according to the cycle-consistency loss.

In S806, the target domain generation word is input into the character classification model to calculate a wrong word loss.

The character classification model is used for detecting whether the target domain generation words are wrong words. The wrong word loss is used for constraining a wrong word rate of the target domain generation word output by the character generation model, and optionally refers to a difference between the word and the correct word.

The target domain generation word is input into the character classification model to obtain a generation character vector $\overline{X}=[x_0, x_1 \cdots x_i \cdots x_n]$ of the target domain generation word, where each element in the vector $\overline{X}$ may represent one character in the training sample and n represents the number of characters in the training sample, for example, the training sample has 6761 words, then n may be equal to 6760. For the first target domain generation word described above, that a standard character vector $\overline{Y}=[y_0, y_1 \cdots y_i \cdots y_n]$ is preset, where each element in $\overline{Y}$ may represent one character in the training sample, then n represents the number of characters in the training sample, for example, the training sample has 6761 words, then n may be equal to 6760.

The standard character vector $\overline{Y}$ represents a vector that should be output by the character classification model when the target domain generation word is input into the character classification model. For example, if the target domain generation word is a "做" word, which is the first of n words in the training sample, then a standard character vector of the "做" word may be represented as $\overline{Y}=[1,0,0......0]$, the wrong word loss may be determined according to the cross entropy between the generation character vector $\overline{X}$ and the standard character vector $\overline{Y}$ of the first target domain generation word. The wrong word loss may be expressed by equation (10) as follows:

$$L_C = -\sum_0^n x_i \, log \, y_i \quad (10)$$

Lc represents the wrong word loss, $x_i$ represents an element with a subscript of i in the generation character vector, yi represents an element with a subscript of i in the standard character vector, i is an integer greater than or equal to 0 and less than or equal to n, and n represents the number of elements in the generation character vector and the standard character vector.

According to the embodiments of the present disclosure, the wrong word loss may be used for constraining a wrong word rate of the target domain generation word output by the character generation model, so that the probability of the wrong word generation of the character generation model is reduced.

It should be noted that the discrimination model and the component classification model may be jointly trained with the character generation model, and during a later application, a style migration of the image may be achieved only by using the trained character generation model.

In S807, a parameter of the character generation model is adjusted according to the feature loss, the component classification loss, the character confrontation loss, the style confrontation loss and the wrong word loss.

According to the technical scheme of the present disclosure, the target domain generation word is generated based on the source domain sample word and the target domain style word by using the character generation model, the generation of fonts of various styles may be realized, moreover, the component classification loss is introduced by using the component classification model, so that the learning range of font styles is enlarged, and the migration accuracy of the font styles is improved; the character confrontation loss and the style confrontation loss are introduced by using the discrimination model, so that the ability of the character generation model to learn correct fonts and the ability of the character generation model to learn the font styles may be improved; the wrong word loss and the feature loss are introduced by using the character classification model, so that the ability of the character generation model to learn the font features may be improved, and the probability of the wrong word generation is reduced.

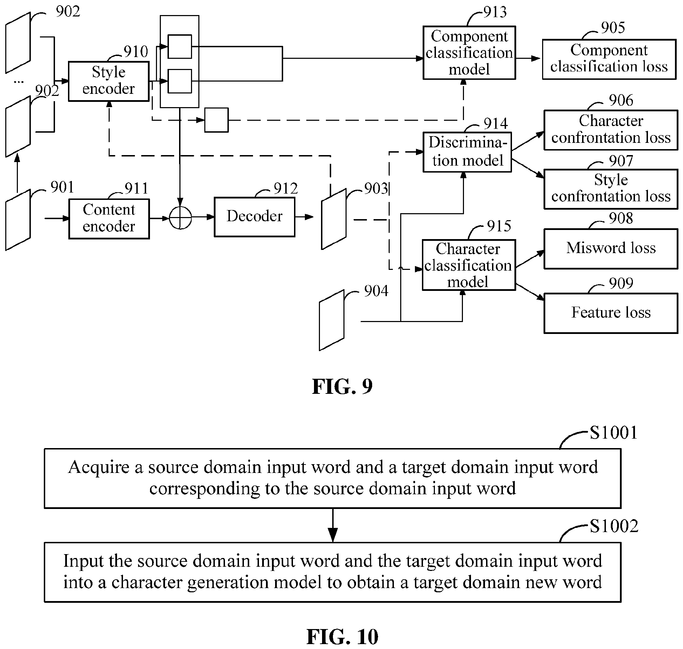

FIG. 9 is a scene diagram of a training method for a character generation model according to an embodiment of the present disclosure. As shown in FIG. 9, FIG. 9 shows a scene diagram of a training method for a character generation model disclosed according to an embodiment of the present disclosure, the character generation model includes a style encoder 910, a content encoder 911, and a decoder 912. A source domain sample word 901 is sent to the content encoder 911 to obtain a content feature vector, a target domain style word 902 is determined according to the source domain sample word 901, and the target domain style word 902 is sent to the style encoder 910 so as to obtain a first style feature vector. Multiple target domain style words 902 are provided, and multiple first style feature vectors are provided correspondingly. The multiple first style feature vectors are fused to obtain a fusion style feature vector, and the fusion style feature vector and the content feature vector are fused to obtain a target feature vector. The target feature vector is sent to the decoder 912 for decoding to obtain a target domain generation word 903. The target domain generation word 903 is input into the style encoder 910 to obtain the second style feature vector of the target domain generation word 903. The second style feature vector and the first style feature vector are input into the component classification model 913 to calculate a component classification loss 905. The target domain sample word 904 and the target domain generation word 903 are input into a discrimination model 914 to calculate a character confrontation loss 906 and a style confrontation loss 907. The target domain generation word 903 and the target domain sample word 904 are input into a pre-trained character classification model 915 to calculate a feature loss 909 of the character generation model. The target domain generation word 903 is input into the character classification model 915 to calculate a misword loss 908.

FIG. 10 is a flowchart of a character generation method according to an embodiment of the present disclosure, and this embodiment may be applicable to a case that a source domain style word is converted into a target domain style word according to a training character generation model to generate a new character. The method of this embodiment may be executed by a character generation apparatus, the apparatus is implemented in software and/or hardware and is optionally configured in an electronic device with certain data calculating capabilities. The electronic device may be a client device or a server device, and the client device is such as a mobile phone, a tablet computer, an on-board terminal, or a desktop computer.

In S 1001, a source domain input word and a target domain input word corresponding to the source domain input word are acquired.

The source domain input word may be an image of words that need to be converted to a target domain font style. The target domain input word may be an image formed by the words with the target domain font style. A component splitting is performed on the source domain input word, at least one component that constitutes the source domain input word is determined, and the target domain input word corresponding to the source domain input word is screened form a set of pre-generated target domain input words according to each component. At least one target domain input word is provided.

The image formed by the words with the target domain font style may be acquired in advance and a set of target domain input words are formed. The set is an image formed of pre-acquired words that have the target domain font style and cover the full component. Exemplarily, for Chinese characters, the target domain font style is a user handwritten font style, images of words with the handwritten font style provided by user authorization may be acquired in advance, and the set of target domain input words is generated. In an embodiment, 100 words overlaid with all radicals may be pre-configured and the user may be prompted to authorize the provision of the words with the handwritten font style for the 100 words overlaid with the all radicals so as to generate the set of target domain input words.

In S 1002, the source domain input word and the target domain input word are input into a character generation model to obtain a target domain new word; where the character generation model is obtained by training according to the training method for the character generation model of any one of the embodiments of the present disclosure.

The character generation model is obtained by training according to the training method of the character generation model. The target domain new word may refer to a word with the target domain font style of a content corresponding to the source domain input word. For example, the source domain input word is a regular script word image, and the target domain new word is a handwritten word image, the handwritten word image may be obtained by inputting the regular script word image into the character generation model, that is, the target domain new word.

In the case of obtaining the target domain new word, a font library may be built based on the target domain new word. For example, new words generated by the character generation model are stored and a font library with the handwritten font style is established. The font library may be applied to an input method, and the user may directly acquire words with the handwritten font style by using the input method based on the font library, which may satisfy the diverse needs of the user and improve the user experience.

The source domain input word and the target domain input word corresponding to the source domain input word are acquired and input into the character generation model so as to obtain the target domain new word, so that the source domain input word is accurately converted into the target domain new word, the accuracy of the generation of the target domain new word may be improved, the efficiency of the generation of the target domain new word may be improved, and the labor cost for generating the target domain new word is reduced.

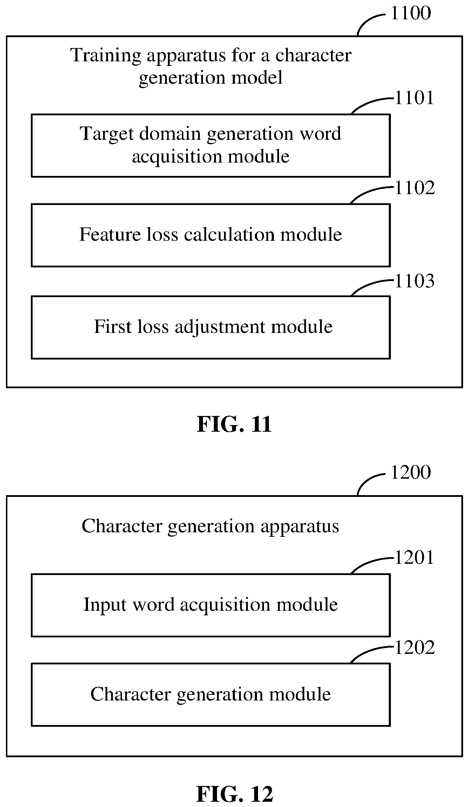

According to an embodiment of the present disclosure, FIG. 11 is a structure diagram of a training apparatus for a character generation model according to an embodiment of the present disclosure, and the embodiment of the present disclosure is applicable to training a character generation model, the character generation model is configured to convert a source domain style word into a target domain style word. The apparatus is implemented in software and/or hardware and is optionally configured in an electronic device with certain data calculating capabilities.

A training apparatus 1100 for a character generation model as shown in FIG. 11 includes a target domain generation word acquisition module 1101, a feature loss calculation module 1102, and a first loss adjustment module 1103.

The target domain generation word acquisition module 1101 is configured to input a source domain sample word and a target domain style word into the character generation model to obtain a target domain generation word.

The feature loss calculation module 1102 is configured to input the target domain generation word and a target domain sample word into a pre-trained character classification model to calculate a feature loss of the character generation model.

The first loss adjustment module 1103 is configured to adjust a parameter of the character generation model according to the feature loss.

According to the technical scheme of the present disclosure, the target domain generation word is generated based on the source domain sample word and the target domain style word by using the character generation model, the generation of multiple styles of fonts may be realized, moreover, the feature loss is introduced through the character classification model, so that the character generation model learns a feature with larger difference between the target domain generation word and the target domain sample word, whereby the character generation model learns more font details, the capability of the character generation model for learning a font feature may be improved, and the accuracy of a word with the target domain font style generated by the character generation model may be improved.

Further, the feature loss calculation module 1102 includes a first feature map generation unit, a second feature map generation unit and a feature loss calculation unit. The first feature map generation unit is configured to input the target domain generation word into the character classification model to obtain a generation feature map output by at least one feature layer of the character classification model. The second feature map generation unit is configured to input the target domain sample word into the character classification model to obtain a sample feature map output by the at least one feature layer of the character classification model. The feature loss calculation unit is configured to calculate the feature loss of the character generation model according to a difference between the generation feature map and the sample feature map of the at least one feature layer.

Further, the feature loss calculation unit includes a pixel loss calculation subunit and a feature loss calculation subunit. The pixel loss calculation subunit is configured to calculate a pixel difference between a generation feature map and a sample feature map of the each of the at least one feature layer to obtain a pixel loss of the at least one feature layer. The feature loss calculation subunit is configured to calculate the feature loss of the character generation model according to the pixel loss of the at least one feature layer.

Further, the pixel loss calculation subunit is configured to: calculate, for a pixel point at each of multiple positions in the generation feature map of the each of the at least one feature layer, an absolute value of a difference value between a pixel value of the pixel point at the each of multiple positions and a pixel value of a pixel point at a corresponding position in the sample feature map to obtain a difference of the pixel point at the each position; and determine the pixel difference between the generation feature map and the sample feature map of the at least one feature layer according to differences of pixel points at the multiple positions.

Further, the training apparatus of the character generation model further includes: a first feature vector calculation module, a second feature vector calculation module, a component classification loss calculation module, a confrontation loss calculation module, a wrong word loss calculation module and a second loss adjustment module. The first feature vector calculation module is configured to input the target domain style word into the character generation model to obtain a first style feature vector of the target domain style word. The second feature vector calculation module is configured to input the target domain generation word into the character generation model to obtain a second style feature vector of the target domain generation word. The component classification loss calculation module is configured to input the second style feature vector and the first style feature vector into a component classification model, and calculate a component classification loss. The confrontation loss calculation module is configured to input the target domain sample word and the target domain generation word into a discrimination model to calculate a character confrontation loss and a style confrontation loss. The wrong word loss calculation module is configured to input the target domain generation word into the character classification model to calculate a wrong word loss. The second loss adjustment module is configured to adjust a parameter of the character generation model according to the component classification loss, the character confrontation loss, the style confrontation loss and the wrong word loss.

Further, the source domain sample word is an image with a source domain font style, and the target domain sample word is an image with a target domain font style.

The above-described training apparatus for the character generation model may perform the training method for the character generation model provided in any of the embodiments of the present disclosure, and has corresponding functional modules and beneficial effects of performing the training method for the character generation model.

According to an embodiment of the present disclosure, FIG. 12 is a structure diagram of a character generation apparatus according to an embodiment of the present disclosure, and the embodiment of the present disclosure is applicable to a case that a source domain style word is converted into a target domain style word according to a training character generation model to generate a new character. The apparatus is implemented in software and/or hardware and is optionally configured in an electronic device with certain data calculating capabilities.

The character generation apparatus 1200 as shown in FIG. 12 includes an input word acquisition module 1201 and a character generation module 1202.

The input word acquisition module 1201 is configured to acquire a source domain input word and a target domain input word corresponding to the source domain input word.

The character generation module 1202 is configured to input the source domain input word and the target domain input word into a character generation model to obtain a target domain new word; where the character generation model is obtained by training according to the training method for the character generation model of any one of the embodiments of the present disclosure.

The source domain input word and the target domain input word corresponding to the source domain input word are acquired and input into the character generation model so as to obtain the target domain new word, so that the source domain input word is accurately converted into the target domain new word, the accuracy of the generation of the target domain new word may be improved, the efficiency of the generation of the target domain new word may be improved, and the labor cost for generating the target domain new word is reduced.

The above-described character generation apparatus may perform the character generation method provided in any of the embodiments of the present disclosure, and has corresponding function modules and beneficial effects of performing the character generation method.

In the technical scheme of the present disclosure, processes of the collection, storage, use, processing, transmission, provision and disclosure and the like of user's personal information involved are all in compliance with the provisions of relevant laws and regulations, and do not violate the public order and good customs.

According to the embodiments of the present disclosure, the present disclosure further provides an electronic device, a readable storage medium and a computer program.

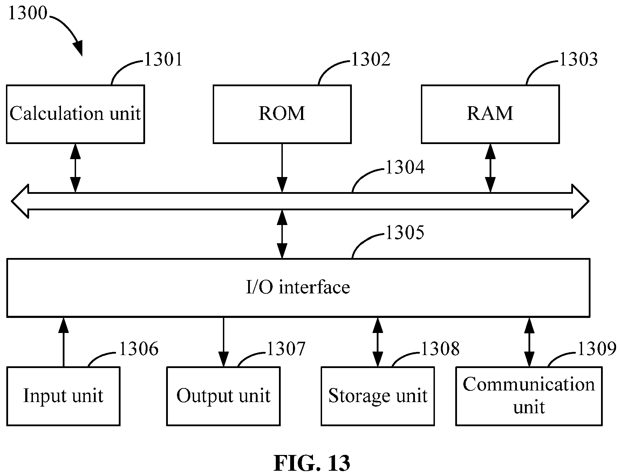

FIG. 13 shows a schematic block diagram of an exemplary electronic device 1300 that may be used for implementing the embodiments of the present disclosure. The electronic device is intended to represent various forms of digital computers, such as laptops, desktops, workstations, personal digital assistants, servers, blade servers, mainframe computers, and other appropriate computers. The electronic device may also represent various forms of mobile devices, such as personal digital processing, cellphones, smartphones, wearable devices, and other similar calculation devices. The components shown herein, their connections and relationships between these components, and the functions of these components, are illustrative only and are not intended to limit implementations of the present disclosure described and/or claimed herein.

As shown in FIG. 13, the device 1300 includes a calculation unit 1301, the calculation unit 1301 may perform various appropriate actions and processes according to a computer program stored in a read-only memory (ROM) 1302 or a computer program loaded from a storage unit 1308 into a random-access memory (RAM) 1303. The RAM 1303 may also store various programs and data required for the operation of the device 1300. The calculation unit 1301, the ROM 1302, and the RAM 1303 are connected via a bus 1304. An input/output (I/O) interface 1305 is also connected to the bus 1304.

Multiple components in the device 1300 are connected to the I/O interface 1305, and the multiple components include an input unit 1306 such as a keyboard or a mouse, an output unit 1307 such as various types of displays or speakers, the storage unit 1308 such as a magnetic disk or an optical disk, and a communication unit 1309 such as a network card, a modem or a wireless communication transceiver. The communication unit 1309 allows the device 1300 to exchange information/data with other devices over a computer network such as the Internet and/or various telecommunication networks.

The calculation unit 1301 may be a variety of general-purpose and/or dedicated processing assemblies having processing and calculating capabilities. Some examples of the calculation unit 1301 include, but are not limited to, a central processing unit (CPU), a graphics processing unit (GPU), a special-purpose artificial intelligence (AI) calculation chip, a calculation unit executing machine learning model algorithms, a digital signal processor (DSP) and any suitable processor, controller and microcontroller. The calculation unit 1301 performs the various methods and processes described above, such as the training method for the character generation model or the character generation method. For example, in some embodiments, the training method for the character generation model or the character generation method may be implemented as computer software programs tangibly embodied in a machine-readable medium, such as the storage unit 1308. In some embodiments, part or all of computer programs may be loaded and/or installed on the device 1300 via the ROM 1302 and/or the communication unit 1309. When the computer program is loaded to the RAM 1303 and executed by the calculation unit 1301, one or more steps of the training method for a character generation model described above may be executed. Alternatively, in other embodiments, the calculation unit 1301 may be configured, in any other suitable manners (e.g., by means of firmware), to perform the training method for a character generation model.

Various implementations of the systems and technologies described above herein may be achieved in digital electronic circuit systems, integrated circuit systems, field-programmable gate arrays (FPGAs), application-specific integrated circuits (ASICs), application-specific standard products (ASSPs), systems on chip (SOCs), complex programmable logic devices (CPLDs), computer hardware, firmware, software, and/or combinations thereof. These various implementations may include implementation in one or more computer programs, and the one or more computer programs are executable and/or interpretable on a programmable system including at least one programmable processor, the programmable processor may be a special-purpose or general-purpose programmable processor for receiving data and instructions from a memory system, at least one input device and at least one output device and transmitting data and instructions to the memory system, the at least one input device and the at least one output device.

Program codes for implementing the methods of the present disclosure may be written in any combination of one or more programming languages. These program codes may be provided for the processor or controller of a general-purpose computer, a special-purpose computer, or another programmable data processing device to enable the functions/operations specified in a flowchart and/or a block diagram to be implemented when the program codes are executed by the processor or controller. The program codes may be executed entirely on a machine, partly on the machine, as a stand-alone software package, partly on the machine and partly on a remote machine, or entirely on the remote machine or server.

In the context of the present disclosure, a machine-readable medium may be a tangible medium that may contain or store a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any appropriate combination of the foregoing. More specific examples of the machine-readable storage medium may include an electrical connection based on one or more wires, a portable computer diskette, a hard disk, a random access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination of the foregoing.

To provide the interaction with a user, the systems and technologies described here may be implemented on a computer. The computer has a display device (e.g., a cathode-ray tube (CRT) or liquid-crystal display (LCD) monitor) for displaying information to the user; and a keyboard and a pointing device (e.g., a mouse or a trackball) through which the user may provide input into the computer. Other kinds of devices may also be used for providing for interaction with the user; for example, feedback provided to the user may be sensory feedback in any form (such as, visual feedback, auditory feedback, or haptic feedback); and input from the user may be received in any form (including acoustic input, speech input, or haptic input).

The systems and technologies described here may be implemented in a calculation system including a back-end component (e.g., a data server), or a calculation system including a middleware component (such as, an application server), or a calculation system including a front-end component (e.g., a client computer having a graphical user interface or a web browser through which the user may interact with the implementations of the systems and technologies described herein), or a calculation system including any combination of such back-end component, middleware component, or front-end component. The components of the system may be interconnected by any form or medium of digital data communication (for example, a communication network). Examples of the communication network include a local area network (LAN), a wide area network (WAN), and the Internet.

The computer system may include clients and servers. A client and a server are generally remote from each other and typically interact through the communication network. A relationship between the clients and the servers arises by virtue of computer programs running on respective computers and having a client-server relationship to each other. The server may be a cloud server, and may also be a server of a distributed system, or a server combining a blockchain.

It should be understood that various forms of the flows shown above, reordering, adding or deleting steps may be used. For example, the steps described in the present disclosure may be executed in parallel, sequentially or in different orders as long as the desired result of the technical scheme provided in the present disclosure may be achieved. The execution sequence of these steps is not limited herein.

The above implementations should not be construed as limiting the protection scope of the present disclosure. It should be understood by those skilled in the art that various modifications, combinations, sub-combinations and substitutions may be made, depending on design requirements and other factors. Any modification, equivalent replacement, and improvement made within the spirit and principle of the present disclosure should be included within the protection scope of the present disclosure.

**Claims**

1. A training method for a character generation model, comprising:

    inputting (S101, S301, S801) a source domain sample word and a target domain style word into the character generation model to obtain a target domain generation word;
    inputting (S102) the target domain generation word and a target domain sample word into a pre-trained character classification model to calculate a feature loss of the character generation model; and
    adjusting (S 103) a parameter of the character generation model according to the feature loss.

2. The method of claim 1, wherein inputting (S102) the target domain generation word and the target domain sample word into the pre-trained character classification model to calculate the feature loss of the character generation model comprises:

    inputting (S302) the target domain generation word into the character classification model to obtain a generation feature map output by at least one feature layer of the character classification model;

inputting (S303) the target domain sample word into the character classification model to obtain a sample feature map output by the at least one feature layer of the character classification model; and

calculating (S304) the feature loss of the character generation model according to a difference between the generation feature map and the sample feature map of the at least one feature layer.

3. The method of claim 2, wherein calculating the feature loss of the character generation model comprises:

calculating a pixel difference between a generation feature map and a sample feature map of the each of the at least one feature layer to obtain a pixel loss of the at least one feature layer; and

calculating the feature loss of the character generation model according to the pixel loss of the at least one feature layer.

4. The method of claim 3, wherein calculating the pixel difference between the generation feature map and the sample feature map of the each of the at least one feature layer comprises:

for a pixel point at each of multiple positions in the generation feature map of the each of the at least one feature layer, calculating an absolute value of a difference value between a pixel value of the pixel point at the each of multiple positions and a pixel value of a pixel point at a corresponding position in the sample feature map to obtain a difference of the pixel point at the each position; and

determining the pixel difference between the generation feature map and the sample feature map of the at least one feature layer according to differences of pixel points at the multiple positions.

5. The method of claim 1, further comprising:

inputting the target domain style word into the character generation model to obtain a first style feature vector of the target domain style word;

inputting the target domain generation word into the character generation model to obtain a second style feature vector of the target domain generation word;

inputting the first style feature vector and the second style feature vector into a component classification model to calculate a component classification loss;

inputting the target domain sample word and the target domain generation word into a discrimination model to calculate a character confrontation loss and a style confrontation loss;

inputting the target domain generation word into the character classification model to calculate a wrong word loss; and

adjusting a parameter of the character generation model according to the component classification loss, the character confrontation loss, the style confrontation loss and the wrong word loss.

6. The method of any one of claims 1 to 5, wherein the source domain sample word is an image with a source domain font style, and the target domain sample word is an image with a target domain font style.

7. A character generation method, comprising:

acquiring (S1001) a source domain input word and a target domain input word corresponding to the source domain input word; and

inputting (S1001) the source domain input word and the target domain input word into a character generation model to obtain a target domain new word;

wherein the character generation model is obtained by training according to the training method for the character generation model of any one of claims 1 to 6.

8. A training apparatus (1100) for a character generation model, comprising:

a target domain generation word acquisition module (1101), which is configured to input a source domain sample word and a target domain style word into the character generation model to obtain a target domain generation word;

a feature loss calculation module (1102), which is configured to input the target domain generation word and a target domain sample word into a pre-trained character classification model, and calculate a feature loss of the character generation model; and

a first loss adjustment module (1103), which is configured to adjust a parameter of the character generation model according to the feature loss.

9. The apparatus of claim 8, wherein the feature loss calculation module (1102) comprises:

a first feature map generation unit, which is configured to input the target domain generation word into the character classification model to obtain a generation feature map output by at least one feature layer of the character classification model;

a second feature map generation unit, which is configured to input the target domain sample word into the character classification model to obtain a sample feature map output by the at least one feature layer of the character classification model; and

a feature loss calculation unit, which is configured to calculate the feature loss of the character generation model according to a difference between the generation feature map and the sample feature map of the at least one feature layer.

10. The apparatus of claim 9, wherein the feature loss calculation unit (1102) comprises:

a pixel loss calculation subunit, which is configured to calculate a pixel difference between a generation feature map and a sample feature map of the each of the at least one feature layer to obtain a pixel loss of the at least one feature layer; and

a feature loss calculation subunit, which is configured to calculate the feature loss of the character generation model according to the pixel loss of the at least one feature layer.

11. The apparatus of claim 10, wherein the pixel loss calculation subunit is configured to: calculate, for a pixel point at each of multiple positions in the generation feature map of the each of the at least one feature layer, an absolute value of a difference value between a pixel value of the pixel point at the each of multiple positions and a pixel value of a pixel point at a corresponding position in the sample feature map to obtain a difference of the pixel point at the each position; and determine the pixel difference between the generation feature map and the sample feature map of the at least one feature layer according to differences of pixel points at the multiple positions.

12. A character generation apparatus (1200), comprising:

an input word acquisition module (1201), which is configured to acquire a source domain input word and a target domain input word corresponding to the source domain input word; and

a character generation module (1202), which is configured to input the source domain input word and the target domain input word into a character generation model to obtain a target domain new word; wherein the character generation model is obtained by training according to the training apparatus for the character generation model of any one of claims 8 to 11.

13. An electronic device, comprising:

at least one processor; and
a memory communicatively connected to the at least one processor;
wherein the memory stores an instruction executable by the at least one processor, and the instruction, when executed by the at least one processor, causes the at least one processor to perform the training method for the character generation model of any one of claims 1 to 6 or the character generation method of claim 7.

14. A non-transitory computer readable storage medium storing a computer instruction, wherein the computer instruction is configured to cause a computer to perform the training method for the character generation model of any one of claims 1 to 6 or the character generation method of claim 7.

15. A computer program, comprising a computer program, wherein the computer program, when executed by a processor, implements the training method for the character generation model of any one of claims 1 to 6 or the character generation method of claim 7.

**Amended claims in accordance with Rule 137(2) EPC.**

1. A computer-implemented training method for a character generation model, comprising:

determining at least one component contained in a source domain sample word, and determining, in a set of pre-acquired target domain style words, a target domain style word containing the at least one component;
inputting (S101, S301, S801) the source domain sample word and the target domain style word into the character generation model to obtain a target domain generation word;
inputting (S102) the target domain generation word and a target domain sample word into a pre-trained character classification model to calculate a feature loss of the character generation model; and
adjusting (S103) a parameter of the character generation model according to the feature loss.

2. The method of claim 1, wherein the character classification model comprises at least one feature layer, and inputting (S102) the target domain generation word and the target domain sample word into the pre-trained character classification model to calculate the feature loss of the character generation model comprises:

inputting (S302) the target domain generation word into the character classification model to obtain a generation feature map output by the at least one feature layer of the character classification model;
inputting (S303) the target domain sample word into the character classification model to obtain a sample feature map output by the at least one feature layer of the character classification model; and
calculating (S304) the feature loss of the character generation model according to a difference between the generation feature map and the sample feature map output by the at least one feature layer.

3. The method of claim 2, wherein calculating the feature loss of the character generation model comprises:

calculating a pixel difference between the generation feature map and the sample feature map output by the at least one feature layer to obtain a pixel loss of the at least one feature layer; and
calculating the feature loss of the character generation model according to the pixel loss of the at least one feature layer.

4. The method of claim 3, wherein calculating the pixel difference between the generation feature map and the sample feature map output by the at least one feature layer comprises:

for each of multiple pixel points in the generation feature map, calculating an absolute value of a difference value between a pixel value of the pixel point and a pixel value of a corresponding pixel point in the sample feature map to obtain a pixel point difference; and
determining the pixel difference according to pixel point differences.

5. The method of claim 1, further comprising:

inputting the target domain style word into the character generation model to obtain a first style feature vector of the target domain style word;
inputting the target domain generation word into the character generation model to obtain a second style feature vector of the target domain generation word;
inputting the first style feature vector and the second style feature vector into a component classification model to calculate a component classification loss;
inputting the target domain sample word and the target domain generation word into a discrimination model to calculate a character confrontation loss and a style confrontation loss;
inputting the target domain generation word into the character classification model to calculate a wrong word loss; and
adjusting a parameter of the character generation model according to the component classification loss, the character confrontation loss, the style confrontation loss and the wrong word loss.

6. The method of any one of claims 1 to 5, wherein the source domain sample word is an image with a source domain font style, and the target domain sample word is an image with a target domain font style.

7. A computer-implemented character generation method, comprising:

acquiring (S1001) a source domain input word and a target domain input word corresponding to the source domain input word, wherein the target domain input word comprises at least one component that constitutes the source domain input word; and

inputting (S1001) the source domain input word and the target domain input word into a character generation model to obtain a target domain new word;

wherein the character generation model is trained according to the method of any one of claims 1 to 6.

8. A training apparatus (1100) for a character generation model, comprising:

a determination module, which is configured to determine at least one component contained in a source domain sample word, and determine, in a set of pre-acquired target domain style words, a target domain style word containing the at least one component;

a target domain generation word acquisition module (1101), which is configured to input the source domain sample word and the target domain style word into the character generation model to obtain a target domain generation word;

a feature loss calculation module (1102), which is configured to input the target domain generation word and a target domain sample word into a pre-trained character classification model to calculate a feature loss of the character generation model; and

a first loss adjustment module (1103), which is configured to adjust a parameter of the character generation model according to the feature loss.

9. The apparatus of claim 8, wherein the character classification model comprises at least one feature layer, and the feature loss calculation module (1102) comprises:

a first feature map generation unit, which is configured to input the target domain generation word into the character classification model to obtain a generation feature map output by the at least one feature layer of the character classification model;

a second feature map generation unit, which is configured to input the target domain sample word into the character classification model to obtain a sample feature map output by the at least one feature layer of the character classification model; and

a feature loss calculation unit, which is configured to calculate the feature loss of the character generation model according to a difference between the generation feature map and the sample feature map output by the at least one feature layer.

10. The apparatus of claim 9, wherein the feature loss calculation unit (1102) comprises:

a pixel loss calculation subunit, which is configured to calculate a pixel difference between the generation feature map and the sample feature map output by the at least one feature layer to obtain a pixel loss of the at least one feature layer; and

a feature loss calculation subunit, which is configured to calculate the feature loss of the character generation model according to the pixel loss of the at least one feature layer.

11. The apparatus of claim 10, wherein the pixel loss calculation subunit is configured to: for each of multiple pixel points in the generation feature map, calculate an absolute value of a difference value between a pixel value of the pixel point and a pixel value of a corresponding pixel point in the sample feature map to obtain a pixel point difference; and determine the pixel difference according to pixel point differences.

12. A character generation apparatus (1200), comprising:

an input word acquisition module (1201), which is configured to acquire a source domain input word and a target domain input word corresponding to the source domain input word, wherein the target domain input word comprises at least one component that constitutes the source domain input word; and

a character generation module (1202), which is configured to input the source domain input word and the target domain input word into a character generation model to obtain a target domain new word; wherein the character generation model is trained according to the training apparatus of any one of claims 8 to 11.

13. An electronic device, comprising:

at least one processor; and
a memory communicatively connected to the at least one processor;
wherein the memory stores an instruction executable by the at least one processor, and the instruction, when executed by the at least one processor, causes the at least one processor to perform the method of any one of claims 1 to 7.

14. A non-transitory computer readable storage medium storing a computer instruction, wherein the computer instruction is configured to cause a computer to perform the method of any one of claims 1 to 7.

15. A computer program product, comprising a computer program, wherein the computer program, when executed by a processor, implements the method of any one of claims 1 to 7.

| Input a source domain sample word and a target domain style word into the character generation model to obtain a target domain generation word | ⌐S101 |

| Input the target domain generation word and a target domain sample word into a pre-trained character classification model to calculate a feature loss of the character generation model | ⌐S102 |

| Adjust a parameter of the character generation model according to the feature loss | ⌐S103 |

**FIG. 1**

**FIG. 2**

S301

Input a source domain sample word and a target domain style word into the character generation model to obtain a target domain generation word

S302

Input the target domain generation word into the character classification model to obtain a generation feature map output by at least one feature layer of the character classification model

S303

Input the target domain sample word into the character classification model to obtain a sample feature map output by the at least one feature layer of the character classification model

S304

Calculate the feature loss of the character generation model according to a difference between the generation feature map and the sample feature map of the at least one feature layer

S305

Adjust a parameter of the character generation model according to the feature loss

**FIG. 3**

401  402  403

404  405  406

**FIG. 4**

**FIG. 5**

**FIG. 6**

**FIG. 7**

```
                                                              ┌─S801
┌──────────────────────────────────────────────────────────────┐
│  Input a source domain sample word and a target domain style   │
│  word into the character generation model to obtain a target   │
│  domain generation word and a first style feature vector of    │
│  the target domain style word                                  │
└──────────────────────────────────────────────────────────────┘
                              │
                              ▼                               ┌─S802
┌──────────────────────────────────────────────────────────────┐
│  Input the target domain generation word and a target domain   │
│  sample word into a pre-trained character classification       │
│  model to calculate a feature loss of the character generation │
│  model                                                         │
└──────────────────────────────────────────────────────────────┘
                              │
                              ▼                               ┌─S803
┌──────────────────────────────────────────────────────────────┐
│  Input the target domain generation word into the character    │
│  generation model to obtain a second style feature vector of   │
│  the target domain generation word                             │
└──────────────────────────────────────────────────────────────┘
                              │
                              ▼                               ┌─S804
┌──────────────────────────────────────────────────────────────┐
│  Input the second style feature vector and the first style     │
│  feature vector into a component classification model to       │
│  calculate the component classification loss                   │
└──────────────────────────────────────────────────────────────┘
                              │
                              ▼                               ┌─S805
┌──────────────────────────────────────────────────────────────┐
│  Input the target domain sample word and the target domain     │
│  generation word into a discrimination model to calculate a    │
│  character confrontation loss and a style confrontation loss    │
└──────────────────────────────────────────────────────────────┘
                              │
                              ▼                               ┌─S806
┌──────────────────────────────────────────────────────────────┐
│  Input the target domain generation word into the character    │
│  classification model to calculate a wrong word los            │
└──────────────────────────────────────────────────────────────┘
                              │
                              ▼                               ┌─S807
┌──────────────────────────────────────────────────────────────┐
│  Adjust a parameter of the character generation model          │
│  according to the feature loss, the component classification    │
│  loss, the character confrontation loss, the style              │
│  confrontation loss and the wrong word loss                    │
└──────────────────────────────────────────────────────────────┘
```

**FIG. 8**

902

910

Style
encoder

913

Component
classification
model

905

Component
classification loss

906

Character
confrontation loss

914

Discrimina-
tion model

907

Style
confrontation loss

901

911

Content
encoder

912

Decoder

903

908

Misword loss

915

Character
classification
model

909

Feature loss

904

**FIG. 9**

S1001

Acquire a source domain input word and a target domain input word
corresponding to the source domain input word

S1002

Input the source domain input word and the target domain input word
into a character generation model to obtain a target domain new word

**FIG. 10**

1100

Training apparatus for a character
generation model

1101

Target domain generation word
acquisition module

1102

Feature loss calculation module

1103

First loss adjustment module

**FIG. 11**

1200

Character generation apparatus

1201

Input word acquisition module

1202

Character generation module

**FIG. 12**

1300

1301
Calculation unit

1302
ROM

1303
RAM

1304

1305
I/O interface

1306
Input unit

1307
Output unit

1308
Storage unit

1309
Communication unit

**FIG. 13**

Europäisches Patentamt

European Patent Office

Office européen des brevets

# EUROPEAN SEARCH REPORT

Application Number

EP 22 15 8653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG PARK ET AL: "Few-shot Font Generation with Localized Style Representations and Factorization", ARXIV.ORG, CORNELL UNIVERSITY LIBRARY, 201 OLIN LIBRARY CORNELL UNIVERSITY ITHACA, NY 14853, 23 September 2020 (2020-09-23), XP081769513, * abstract * * page 3, column 1, line 1 – line 8 * * page 4, column 1, line 9 – line 14 * * page 4, column 2, line 9 – page 5, column 1, line 4 * * figure 2 * * caption of figure 2 * * equation 9 * | 1–15 | INV. G06V10/44 G06V10/82 G06V30/244 G06V30/28 |
| A,P | LICHENG TANG ET AL: "Few-Shot Font Generation by Learning Fine-Grained Local Styles", ARXIV.ORG, CORNELL UNIVERSITY LIBRARY, 201 OLIN LIBRARY CORNELL UNIVERSITY ITHACA, NY 14853, 20 May 2022 (2022-05-20), XP091229484, * the whole document * | 1–15 | |
| | | | TECHNICAL FIELDS SEARCHED (IPC) |
| | | | G06V |

The present search report has been drawn up for all claims

| Place of search | Date of completion of the search | Examiner |
|---|---|---|
| The Hague | 14 July 2022 | De Coi, Juri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)